Europäisches Patentamt

(19) European Patent Office

Office européen des brevets

(11) Veröffentlichungsnummer: **0 097 808**
**B1**

(12) **EUROPÄISCHE PATENTSCHRIFT**

(45) Veröffentlichungstag der Patentschrift:
16.07.86

(21) Anmeldenummer: 83105016.6

(22) Anmeldetag: 20.05.83

(51) Int. Cl.⁴: **C 08 F 220/06,** A 61 K 7/00

(54) Partikelförmiges, wasserlösliches Verdickungsmittel.

(30) Priorität: 05.06.82 DE 3221284

(43) Veröffentlichungstag der Anmeldung:
11.01.84 Patentblatt 84/2

(45) Bekanntmachung des Hinweises auf die Patenterteilung:
16.07.86 Patentblatt 86/29

(84) Benannte Vertragsstaaten:
BE DE FR GB NL

(56) Entgegenhaltungen:
DE - A - 2 927 132
GB - A - 1 090 249
US - A - 2 923 692
US - A - 3 066 118

(73) Patentinhaber: Röhm GmbH, Kirschenallee
Postfach 4242, D-6100 Darmstadt 1 (DE)

(72) Erfinder: Koschik, Achim, Erbacher Strasse 1,
D-6100 Darmstadt (DE)
Erfinder: Plainer, Hermann, Dr. Dipl.-Chem., Am
Wembach 15, D-6107 Reinheim 1 (DE)
Erfinder: Schnee, Reiner, Dr. Dipl.-Chem., Arheiiger
Woogstrasse 62, D-6100 Darmstadt-Arheilgen (DE)
Erfinder: Trabitzsch, Hans, Dr. Dipl.-Chem.,
Weingartenstrasse 7, D-6104 Seeheim-Jugenheim 1 (DE)

## Beschreibung

### Gebiet der Erfindung

Die Erfindung betrifft ein partikelförmiges Verdickungsmittel, das in Wasser ohne weitere Zusätze unter Verdickung löslich ist.

### Stand der Technik

Nach DE-A 29 27 132 wird ein schwach vernetztes Polyacrylsäurepulver durch radikalische Fällungspolymerisation von Acrylsäure in Gegenwart eines vernetzenden Monomeren in einem Lösungsmittelgemisch, bestehend aus einem aliphatischen Kohlenwasserstoff und einem niederen Alkanol oder Methyläthylketon, erzeugt. Das ausfallende Polymerisatpulver bildet in alkalihaltigem Wasser mikrogelartige verdickte Lösungen.

Nach US 2 923 692 wird pulverförmige schwach vernetzte Polyacrylsäure mit einer pulverförmigen Base, wie Natriumhydroxyd, vermischt. Das Gemisch löst sich unter gleichzeitiger Neutralisation der Polyacrylsäure ohne weitere Zusätze in Wasser. Dabei entsteht Neutralisationswärme, was die Durchführung des Lösevorganges stören kann. Auch bei Zutritt von Feuchtigkeit zu der trockenen Pulvermischung kommt es zu unerwünschter Hitzeentwicklung durch freigesetzte Neutralisationswärme.

### Aufgabe und Lösung

Gesucht wird ein partikelförmiges Verdickungsmittel auf Basis eines Polymerisats der (Meth)acrylsäure, das in reinem Wasser ohne erhebliche Wärmeentwicklung unter Verdickung löslich ist, insbesondere in einer leicht dosierbaren Form. Erfindungsgemäss wird die Aufgabe durch das partikelförmige Verdickungsmittel und das Verfahren zu seiner Herstellung gemäss den Patentansprüchen gelöst.

### Vorteile

Durch Einsatz des erfindungsgemässen Verdickungsmittels lassen sich Wasser oder wässrige Systeme ohne weitere Zusätze verdicken, wobei bei einem Polymerisatgehalt von 0,25 Gew.-% eine Viskosität über 1000, vorzugsweise über 3000 mPas und bei einem Polymerisatgehalt von 1 Gew.-% eine Viskosität über 20.000, vorzugsweise über 100.000 mPas erreicht wird.

Beim Einrühren in Wasser bildet sich eine mikrogelartige, raumfüllende Struktur, die wenig fadenziehend ist und in der Fachsprache der Anwendungstechnik als «kurz abreissend» bezeichnet wird. Der pH-Wert liegt im Bereich von etwa 7 bis 10.

Das bei der Fällungspolymerisation in Alkohol entstehende Produkt ist nicht gut dosierfähig, da sich das Polymerisat absetzt. Man kann das Polymerisat jedoch auf einfache Weise von dem alkoholischen Medium abtrennen und erhält nach dem Trocknen ein feines, in Wasser schnell lösliches Pulver, das gut dosierbar und in trockenem Zustand gut lagerfähig ist.

Eine andere sicher dosierfähige Anwendungsform entsteht durch Vermischen der alkoholischen Suspension des Fällungspolymerisats mit Wasser. Dabei löst sich ein geringer Teil des Polymerisats in dem entstehenden Wasser-Alkohol-Gemisch unter Verdickung und stabilisiert die Suspension des ungelöst bleibenden partikelförmigen Verdickungsmittels gegen Absitzen. Die wässrig-alkoholische Suspension ist gut lagerfähig und durch Einrühren in Wasser schnell und vollständig löslich.

### Anwendung

Die erfindungsgemässen Verdickungsmittel dienen zum Verdicken von neutralen oder alkalischen wässrigen Systemen, z.B. Anstrichfarben, Druckfarben, kosmetischen Zubereitungen.

Je nach der gewünschten Verdickung wird das Verdickungsmittel in Mengen von 0,1 bis 5 Gew.-%, vorzugsweise 0,2 bis 2 Gew.-%, berechnet als reines Polymerisat, eingesetzt. Die volle Verdickungswirkung wird im allgemeinen innerhalb weniger Minuten nach dem Einrühren in Wasser erreicht, besonders wenn das Pulverprodukt noch alkoholhaltig ist. Die Mengenangaben sind jeweils auf das Trockenprodukt bezogen.

### Aufbau des Polymerisats

Die Komponente a ist vorzugsweise ein Alkalioder Ammonium-Salz der Acrylsäure, jedoch kann es auch ein derartiges Salz der Methacrylsäure oder eines Gemisches der beiden Säuren sein. Die Alkalisalze leiten sich im allgemeinen von Natrium, Kalium oder Lithium, vorzugsweise von Natrium ab. Die Ammoniumsalze sind bevorzugt. Ein Teil der Salzkomponente, jedoch vorzugsweise nicht mehr als die Hälfte, kann durch freie Acryl- oder Methacrylsäure ersetzt sein.

Als vernetzende Komponente b kommen z.B. Diacrylate und Dimethacrylate von Glykolen, wie Alkylenglykoldimethacrylat oder Divinylbenzol oder Divinylester oder Dialkylester zweibasischer Carbonsäuren, wie Diallylphthalat, in Betracht. Bevorzugt werden Verbindungen mit zwei Doppelbindungen von unterschiedlicher Reaktivität bei der radikalischen Polymerisation, wie Allylmethacrylat oder 2-Vinyloxyäthylmethacrylat eingesetzt.

Vorzugsweise ist das Polymerisat allein aus den Komponenten a und b aufgebaut, jedoch können weiter Komponenten c am Aufbau beteiligt sein, sofern sie die Löslichkeit bzw. Quellbarkeit in Wasser und das Verdickungsverhalten nicht beeinträchtigen. Daher müssen die eventuellen Comonomeren c wenigstens zum überwiegenden Teil stark hydrophil oder sogar wasserlöslich sein. Beispiele solcher Comonomeren sind gegebenenfalls durch niedere Alkylreste substituierte Acryl- und Methacrylamide und niedere Hydroxyalkylester von ungesättigten polymerisierbaren Carbonsäuren, wie Hydroxyäthyl- oder Hydroxypropyl-(meth)-acrylat. Sie sollen keine ionischen oder ionisierbaren Gruppen, insbesondere keine Amino- oder Ammoniumgruppen tragen. Comonomere, die nicht diese Voraussetzungen erfüllen, sollen höchstens in geringfügigen, 5 bis 10 Gew.-% nicht überschreitenden Anteilen am Aufbau der Polymerisate beteiligt sein.

*Die Herstellung des Polymerisats*
erfolgt durch Fällungspolymerisation in einem im wesentlichen wasserfreien Medium. Der Wassergehalt darf höchstens 5 Gew.-% (bezogen auf das Medium) betragen, weil sonst die Gefahr der Verklumpung des Polymerisats besteht. Technischer Äthylalkohol ist das bevorzugte Medium. Andere Alkohole sind neben oder anstelle von Äthylalkohol verwendbar, sofern das (Meth)-Arcylsäuresalz darin ausreichend löslich ist.

Da die Salze der (Meth)Acrylsäure im allgemeinen schwer erhältlich sind, löst man in der Regel die freie Säure in dem alkoholischen Medium und führt sie dann ganz oder teilweise in das Salz über. Um dabei die Bildung störender Mengen Wasser zu vermeiden, neutralisiert man vorzugsweise durch Einleiten von Ammoniak oder durch Zugabe von Alkalialkoholaten oder von Alkalimetallen. Die Menge der salzbildenden basischen Komponente richtet sich nach dem gewünschten Neutralisationsgrad.

Der Lösung des (Meth)Acrylsäuresalzes fügt man die weiteren Monomerkomponenten sowie einen radikalischen Polymerisationsinitiator, z.B. ein organisches Peroxid oder eine Azoverbindung zu, und bringt die homogene Lösung unter Rühren auf die Polymerisationstemperatur oder lässt sie allmählich in ein auf Polymerisationstemperatur gehaltenes Rührgefäss einlaufen. Dispergier- und Verteilungsmittel sind im allgemeinen entbehrlich.

Im Laufe der Polymerisation fällt das Polymerisat in Form sehr feiner, mehr oder weniger perlförmiger Partikel aus. Sie können abfiltriert, mit Alkohol nachgewaschen und getrocknet werden und sind dann als frei fliessendes feines Pulver versand-, lager- und gebrauchsfähig.

Für die Praxis genügt es häufig, aus der bei der Polymerisation entstandenen Suspension nur einen Teil des Alkohols abzutrennen, bis ein krümeliges Pulverprodukt entstanden ist, das in Trommeln abgefüllt und bis zur Verwendung gelagert werden kann. Selbst bei Feststoffgehalten von nur 25-30 Gew.-% liegt das Produkt als nicht staubendes, rieselfähiges, gut hantierbares Pulver vor. Die — teilweise — Abtrennung des Alkohols kann z.B. durch Filtrieren, Zentrifugieren oder Vakuumverdampfung erfolgen. Auf Wunsch kann getrocknet werden.

Zur Überführung des Verdickungsmittels in eine wässrig-alkoholische Suspension wird zweckmässig eine bestimmte Wassermenge vorgelegt und das Polymerisationsprodukt einschliesslich des alkoholischen Mediums eingerührt. Dabei muss die Wassermenge in engen Grenzen bemessen werden. Sie soll so gross sein, dass eine stabile, gut fliessfähige und dosierbare Suspension des partikelförmigen Verdickungsmittel entsteht, deren flüssige Phase ein Wasser-Alkohol-Gemisch enthält, das auf 100 Gew.-Teile 65 bis 80 Teile Wasser und 35 bis 20 Teile des Alkohols enthält. Bei hohem Wassergehalt ist die Suspension dickflüssig, bei niedrigem Wassergehalt dünnflüssig.

Wird zuviel Wasser verwendet, so ist die entstehende Suspension hochviskos und schwer handhabbar. Wenn zu wenig Wasser verwendet wird, ist die Suspension instabil und das Polymerisat setzt sich ab. Um die Viskosität genau auf den gewünschten Wert einstellen zu können, behält man zweckmässig einen Teil des vorzulegenden Wassers zurück und setzt es erst der fertigen Suspension bis zum Erreichen des gewünschten Viskositätswertes zu. Anwendungstechnisch vorteilhaft sind Viskositäten von 1000 bis 5000 mPa s. Der Polymerisatgehalt der Suspensionen, die sich unmittelbar durch Vermischen des Polymerisationsansatzes mit Wasser herstellen lassen, liegt zwischen 7 und 12 Gew.-%, bezogen auf das Gewicht der Suspension, unter Einschluss des gelösten Polymerisatanteils. Höhere Polymerisatgehalte sind durch Einrühren von getrennt hergestelltem pulverförmigem Polymerisat erreichbar.

*Beispiel 1*

*Ansatz:*

| | | |
|---|---|---|
| 129,4 | g | Acrylsäure |
| 30,6 | g | NH₃-Gas |
| 12,0 | ml | 1%ige tert.-Butylperpivalatlösung in Äthanol = 0,075% bez. a. Mon. |
| 1,92 | g | Allylmethacrylat = 1,2% bez. a. Mon. |
| 640 | g | Äthanol |
| 2 × 0,8 | ml | tert.-Butylperpivalat = 1,0% bez. a. Mon. |

*Apparatur:*

Witt'scher Topf (2 l), Rückflusskühler, Blattrührer, regulierbare Rührung, Thermometer, Ölbad, 1 Badrührer.

*Durchführung:*

Die Monomeren werden durchmischt und die Acrylsäure in einem Vorratsgefäss durch Einleiten von NH₃-Gas unter Kühlung neutralisiert, Danach wird die Monomerlösung mit 0,075% tert.-Butylperpivalat versetzt und auf 75-78°C erhitzt. Bei 60-70°C beginnt die Ausfällung des polymeren Salzes. Während der Polymerisation wird intensiv gerührt.

Nach ca. 2 Std. u. 3 Std. Polymerisationsdauer wird je 0,5% tert.-Butylperpivalat zudosiert. Die Gesamtpolymerisationsdauer beträgt 4 bis 5 Std. Danach wird der Ansatz abgekühlt, abgenutscht und bei 40 bis 50°C im Trockenschrank getrocknet.

*Kenndaten:*

1%ige Lösung in dest. Wasser: pH 7, Viskosität: 120.000 mPa.s

0,25%ige Lösung in dest. Wasser: pH 7, Viskosität: 6300 mPa.s

*Beispiel 2*

*Ansatz:*

| | | |
|---|---|---|
| 129,4 | g | Acrylsäure |
| 30,6 | g | NH₃-Gas |
| 12 | ml | 1%ige tert.-Butylperpivalatlösung in Äthanol = 0,075% bez. a. Mon. |
| 1,92 | g | 2-Vinyloxyäthylmethacrylat = 1,2% bez. a. Mon. |
| 640 | g | Äthanol |
| 2 × 0,8 | ml | tert.-Butylperpivalat = 1% bez.a.Mon. |

Die Polymerisation wird wie im Beispiel 1 durchgeführt.

*Kenndaten:*

   1%ige  Lösung in dest. Wasser: pH 7, Viskosität:
       620.000 mPa.s
0,25%ige  Lösung in dest. Wasser: pH 7, Viskosität:
       14.000 mPa.s

*Beispiel 3*

*Ansatz:*

| | | |
|---|---|---|
| 48 | g | Acrylamid |
| 90,6 | g | Acrylsäure |
| 21,4 | g | NH₃-Gas |

48     g   Acrylamid
90,6  g   Acrylsäure
21,4  g   NH₃-Gas
12    ml  1%ige tert.-Butylperpivalatlösung in
         Äthanol = 0,075% bez. a. Mon.
1,92  g   Allylmethacrylat = 1,2% bez.a.Mon.
640    g   Äthanol
2 × 0,8 ml tert.-Butylperpivalat = 1% bez.a.Mon.

Die Polymerisation wird wie im Beispiel 1 durchgeführt.

*Kenndaten:*

   1%ige  Lösung in dest. Wasser: pH 7, Viskosität:
       100.000 mPa.s
0,25%ige  Lösung in dest. Wasser: pH 7, Viskosität:
       4600 mPa.s.

*Beispiel 4*

*Ansatz:*

48     g   Acrylamid
90,6  g   Acrylsäure
21,4  g   NH₃-Gas
12    ml  1%ige tert.-Butylperpivalatlösung in
         Äthanol = 0,075% bez.a.Mon.
2,24  g   Allylmethacrylat = 1,4% bez.a.Mon.
640    g   Äthanol
12    ml  1%ige tert.-Butylperpivalatlösung in
         Äthanol = 0,075% bez.a.Mon.

*Apparatur:*

Witt'scher Topf (2 l), Rückflusskühler, regelbare Rühreinrichtung, mit Blattrührer, Thermometer, Mischdüse bzw. Zulauftrichter, Durchflussmesser, Dosierpumpe, Ölbad mit Rührer.

*Durchführung:*

In einem Zulauftrichter wird die gesamte Monomerlösung neutralisiert, 1/4 der Monomerlösung im Reaktionsgefäss vorgelegt und auf 75-80°C erhitzt. Nach Eintrübung der Vorlage erfolgt 2 Std. Monomerzulauf. Eine halbe Stunde nach Zulaufende wird tert.-Butylperpivalat nachgegeben. Die Gesamtpolymerisationsdauer beträgt 4 Std. Anschliessend erfolgt die Aufarbeitung des Ansatzes wie in Beispiel 1 beschrieben.

*Kenndaten:*

   1%ige  Lösung in dest. Wasser: pH 7, Viskosität:
       350.000 mPa.s
0,25%ige  Lösung in dest. Wasser: pH 7, Viskosität:
       3100 mPa.s

*Beispiel 5*

Der Ansatz nach Beispiel 1 wird wiederholt. Nach Beendigung der Polymerisation wird der Ansatz auf Raumtemperatur abgekühlt und in einem Zulauftrichter mit Blattrührer überführt. Durch ständiges Rühren wird das Polymerisat in der Schwebe gehalten. Aus diesem Zulauftrichter lässt man die 800 g Polymerisatsuspension in ein daruntergestelltes Rührgefäss, in dem 1.150 g dest. Wasser vorgelegt sind, unter Rühren einlaufen.

Man beobachtet anfänglich, dass die Polymerisatsuspension in dem vorgelegten Wasser in Lösung geht und dabei die Viskosität ansteigt. Später schlägt die Lösung wieder in eine Suspension um, bei abfallender Viskosität.

Nach Beendigung des Zulaufes der alkoholischen Polymerisatsuspension in das Wasser betrug die Viskosität der erhaltenen wässrig-alkoholischen Polymerisatsuspension 28 mPa s. Eine Probe der Suspension zeigte Sedimentation des Polymerisates. Nach Einrühren von 50 ml Wasser stieg die Viskosität auf 4 100 mPa s und es war eine befriedigende Stabilität erreicht. Der Polymerisatgehalt betrug 8%. Eine Lösung in dest. Wasser mit 1% Trockengehalt hatte eine Viskosität von 105.000 mPa s, eine solche mit 0,25% Trockensubstanz 6.200 mPa s.

**Patentansprüche**

1. Partikelförmiges, wasserlösliches Verdikkungsmittel auf Basis eines schwach vernetzten Polymerisats der (Meth)acrylsäure, dadurch gekennzeichnet, dass es aus feinteiligen Partikeln eines Fällungspolymerisats besteht, an dessen Aufbau

a) 30 bis 99,9 Gew.-% eines Alkali- oder Ammoniumsalzes der Acryl- oder Methacrylsäure oder eines Gemisches solcher Salze, die bis zur Hälfte des Gewichtes dieser Komponente durch Einheiten freier (Meth)Arcrylsäure ersetzt sein können,

b) 0,1 bis 5 vorzugsweise 0,5 bis 2 Gew.-% Einheiten eines vernetzenden Monomeren mit wenigstens zwei polymerisierbaren Doppelbindungen,

c) 0 bis 69,9 Gew.-% Einheiten eines oder mehrerer weiterer überwiegend stark hydrophiler, nichtionischer Comonomerer
beteiligt sind.

2. Partikelförmiges, wasserlösliches Verdikkungsmittel gemäss Anspruch 1, dadurch gekennzeichnet, dass seine 0,25 Gew.-%ige wässrige Lösung eine Viskosität von wenigstens 1000 mPa s und seine 1 Gew.-%ige wässrige Lösung eine Viskosität von wenigstens 20.000 mPa s hat.

3. Partikelförmiges, wasserlösliches Verdikkungsmittel gemäss Anspruch 2, dadurch gekennzeichnet, dass seine 0,25 Gew.-%ige wässrige Lösung eine Viskosität von wenigstens 3000 mPa s und seine 1 Gew.-%ige wässrige Lösung eine Viskosität von wenigstens 100.000 mPa s hat.

4. Partikelförmiges, wasserlösliches Verdikkungsmittel nach den Ansprüchen 1 bis 3, in Form eines trockenen Pulvers.

5. Partikelförmiges, wasserlösliches Verdickungsmittel nach den Ansprüchen 1 bis 3, in Form einer Suspension in einer flüssigen Phase, bestehend aus
65-80 Gew.-% Wasser
35-20 Gew.-% eines niederen aliphatischen Alkohols.

6. Verdickungsmittelsuspension nach Anspruch 5, dadurch gekennzeichnet, dass der niedere aliphatische Alkohol Äthanol ist.

7. Verdickungsmittelsuspension nach den Ansprüchen 5 und 6, gekennzeichnet durch einen Gehalt des schwach vernetzten Polymerisats von mindestens 7, vorzugsweise 7 bis 12 Gew.-%, bezogen auf das Gewicht der Suspension.

8. Verfahren zur Herstellung des partikelförmigen, wasserlöslichen Verdickungsmittels nach den Ansprüchen 1 bis 7, dadurch gekennzeichnet, dass man eine im wesentlichen wasserfreie Lösung eines Monomergemisches aus

a) 30 bis 99,9 Gew.-% eines Alkali- oder Ammoniumsalzes der Acryl- oder Methacrylsäure oder eines Gemisches solcher Salze, die bis zur Hälfte des Gewichts dieser Komponente durch Einheiten freier (Meth)Acrylsäure ersetzt sein können,

b) 0,1 bis 5 vorzugsweise 0,5 bis 2 Gew.-% Einheiten eines vernetzenden Monomeren mit wenigstens zwei polymerisierbaren Doppelbindungen,

c) 0 bis 69,9 Gew.-% Einheiten eines oder mehrerer weiterer überwiegend stark hydrophiler, nichtionischer Comonomerer

in einem flüssigen Medium, bestehend aus einem niederen aliphatischen Alkohol, radikalisch polymerisiert, wobei das schwach vernetzte Polymerisat partikelförmig ausfällt.

9. Verfahren nach Anspruch 8, dadurch gekennzeichnet, dass man das ausgefallene Polymerisat von dem flüssigen Medium abtrennt und gegebenenfalls trocknet.

10. Verfahren nach Anspruch 8, dadurch gekennzeichnet, dass man das aus dem ausgefallenen partikelförmigen Polymerisat und dem flüssigen Medium bestehende Reaktionsprodukt mit einer solchen Menge Wasser vermischt, dass 100 Gew.-Teile des in der flüssigen Phase der entstehenden Verdickungsmittelsuspension enthaltenen Alkohol-Wasser-Gemisches aus
65-80 Gew.-Teilen Wasser und
35-20 Gew.-Teilen des Alkohols bestehen.

## Claims

1. Particulate water-soluble thickener based on a weakly cross-linked polymer of (meth)acrylic acid, characterised in that it consists of finely divided particles of a precipitation polymer synthesised from

a) 30 to 99.9% by weight of an alkali metal or ammonium salt of acrylic or methacrylic acid or a mixture of such salts which may be replaced, up to half the weight of this component, by units of free (meth)acrylic acid,

b) 0.1 to 5, preferably 0.5 to 2% by weight of units of a cross-linking monomer with at least two polymerisable double bonds,

c) 0 to 69.9% by weight of units of one or more other predominantly strongly hydrophilic, nonionic comonomers.

2. Particulate water soluble thickener as claimed in claim 1, characterised in that a 0.25% by weight aqueous solution thereof has a viscosity of at least 1000 mPa s and a 1% by weight aqueous solution thereof has a viscosity of at least 20,000 mPa s.

3. Particulate water soluble thickener as claimed in claim 2, characterised in that a 0.25% by weight aqueous solution thereof has a viscosity of at least 3000 mPa s and a 1% by weight aqueous solution thereof has a viscosity of at least 100,000 mPa s.

4. Particulate water soluble thickener as claimed in claims 1 to 3 in the form of a dry powder.

5. Particulate water soluble thickener as claimed in claims 1 to 3 in the form of a suspension in a liquid phase, consisting of
65-80% by weight of water
35-20% by weight of a lower aliphatic alcohol.

6. Suspension of thickener as claimed in claim 5, characterised in that the lower aliphatic alcohol is ethanol.

7. Suspension of thickener as claimed in claims 5 and 6, characterised in that it contains at least 7 and preferably from 7 to 12% by weight of the weakly cross-linked polymer, based on the weight of the suspension.

8. Process for preparing the particulate water soluble thickener as claimed in claims 1 to 7, characterised in that a substantially anhydrous solution of a monomer mixture consisting of

a) 30 to 99.9% by weight of an alkali metal or ammonium salt of acrylic or methacrylic acid or a mixture of such salts which may be replaced, up to half the weight of this component, by units of free (meth)acrylic acid,

b) 0.1 to 5, preferably 0.5 to 2% by weight of units of a cross-linking monomer with at least two polymerisable double bonds,

c) 0 to 69.9% by weight of units of one or more other predominantly strongly hydrophilic, nonionic comonomers

is radically polymerised in a liquid medium consisting of a lower aliphatic alcohol, whereupon the weakly cross-linked polymer is precipitated in particulate form.

9. Process as claimed in claim 8, characterised in that the polymer precipitated is separated from the liquid medium and optionally dried.

10. Process as claimed in claim 8, characterised in that the reaction product consisting of the precipitated particulate polymer and the liquid medium is mixed with a quantity of water such that 100 parts by weight of the mixture of alcohol and water contained in the liquid phase of the resulting suspension of thickener consist of
65-80 parts by weight of water and
35-20 parts by weight of the alcohol.

**Revendications**

1. Epaississant particulaire hydrosoluble à base d'un polymère faiblement réticulé de l'acide (méth)acrylique, caractérisé en ce qu'il se compose de particules finement divisées d'un produit de polymérisation par précipitation, à la constitution duquel participent:

a) 30 à 99,9% en poids d'un sel alcalin ou ammonique de l'acide acrylique ou méthacrylique ou d'un mélange de tels sels, qui peut être remplacé, jusqu'à la moitié du poids de ce composant, par des unités d'acide (méth)acrylique libre,

b) 0,1 à 5, de préférence 0,5 à 2% en poids d'unités d'un monomère réticulant comportant au moins deux doubles liaisons polymérisables,

c) 0 à 69,9% en poids d'unités d'un ou de plusieurs autres monomères non ioniques, en majorité fortement hydrophiles.

2. Epaississant particulaire hydrosoluble selon la revendication 1, caractérisé en ce que sa solution aqueuse à 0,25% en poids a une viscosité d'au moins 1000 mPa.s et sa solution aqueuse à 1% en poids a une viscosité d'au moins 20 000 mPa.s.

3. Epaississant particulaire hydrosoluble selon la revendication 2, caractérisé en ce que sa solution aqueuse à 0,25% en poids a une viscosité d'au moins 3000 mPa.s et sa solution aqueuse à 1% en poids a une viscosité d'au moins 100 000 mPa.s.

4. Epaississant particulaire hydrosoluble selon l'une quelconque des revendications 1 à 3, sous forme d'une poudre sèche.

5. Epaississant particulaire hydrosoluble selon l'une quelconque des revendications 1 à 3, sous forme d'une suspension dans une phase liquide composée de 65 à 80% en poids d'eau et de 35 à 20% en poids d'un alcool aliphatique inférieur.

6. Suspension d'épaississant selon la revendication 5, caractérisée en ce que l'alcool aliphatique inférieur est l'éthanol.

7. Suspension d'épaississant selon la revendication 5 ou 6, caractérisée par une teneur en polymère faiblement réticulé d'au moins 7, de préférence 7 à 12% en poids, sur la base du poids de la suspension.

8. Procédé pour la préparation de l'épaississant particulaire hydrosoluble selon l'une quelconque des revendications 1 à 7, caractérisé en ce qu'on soumet à une polymérisation radicalaire une solution pratiquement anhydre d'un mélange de monomères composé de:

a) 30 à 99,9% en poids d'un sel alcalin ou ammonique de l'acide acrylique ou méthacrylique ou d'un mélange de tels sels, qui peut être remplacé, jusqu'à la moitié du poids de ce composant, par des unités d'acide (méth)acrylique libre,

b) 0,1 à 5, de préférence 0,5 à 2% en poids d'unités d'un monomère réticulant comportant au moins deux doubles liaisons polymérisables,

c) 0 à 69,9% en poids d'unités d'un ou de plusieurs comonomères non ioniques, en majorité fortement hydrophiles

dans un milieu liquide se composant d'un alcool aliphatique inférieur, le polymère faiblement réticulé précipitant sous forme de particules.

9. Procédé selon la revendication 8, caractérisé en ce qu'on sépare du milieu liquide le polymère précipité et on le sèche éventuellement.

10. Procédé selon la revendication 8, caractérisé en ce que le produit réactionnel se composant du polymère particulaire précipité et du milieu liquide est mélangé avec une quantité d'eau telle que 100 parties en poids du mélange alcool-eau contenu dans la phase liquide de la suspension d'épaississant formée sont constituées par 65 à 80 parties en poids d'eau et 35 à 20 parties en poids de l'alcool.